# EUROPEAN PATENT SPECIFICATION

(11) **EP 3 653 466 B1**
(45) Date of publication and mention of the grant of the patent: **19.05.2021**
(21) Application number: 19159711.1
(22) Date of filing: 27.02.2019
(51) Int. Cl.: B62D 1/04, B62D 7/22, B60R 21/203

(54) **VEHICULAR STEERING WHEEL**
FAHRZEUGLENKRAD
VOLANT DE DIRECTION DE VÉHICULE

(30) Priority: 16.11.2018 KR 20180141389
(43) Date of publication of application: 20.05.2020
(73) Proprietor: Hyundai Motor Company, Seoul 06797 (KR); Kia Motors Corporation, Seoul 06797 (KR)
(72) Inventor: JUNG, Un Jae, Osan-si, Gyeonggi-do 18107 (KR); WANG, Sung Joon, Incheon 21994 (KR)
(74) Representative: Viering, Jentschura & Partner mbB Patent- und Rechtsanwälte

(56) References cited:
- WO-A1-2008/127157
- CN-B- 104 553 726
- US-B1- 8 616 577

## Description

### BACKGROUND OF THE INVENTION

### Field of the invention

The present invention relates to a vehicular steering wheel that utilizes an airbag module as a mass for damping.

### Description of Related Art

During traveling of a vehicle and idling of an engine, vibration occurs in the steering wheel due to vibrations transmitted from the engine and the tires.

When the steering wheel excessively vibrates, the driver may feel uncomfortable, resulting in a problem of deteriorated marketability of the vehicle.

To improve this, a structure has been provided in which a damper is applied to the internal to the steering wheel or a damping structure is applied to the inflator of a driver seat airbag.

However, when the damper is placed inside the steering wheel, a lack of space is caused inside the steering wheel. Thus, it is impossible to increase the mass of the damper beyond a predetermined level, whereby a vibration reduction effect is not so high.

When the damping structure is applied to the inflator, the weight of the inflator itself may be utilized as a damping structure, and thus the vibration reduction effect is relatively high. However, a space is formed by movement due to the damping operation, and thus there is a problem in that gas leaks into this space during the deployment of the airbag.

Unless explicitly indicated as prior art, the information disclosed in this Background of the Invention section is only for enhancement of understanding of the general background of the invention and may not be taken as an acknowledgement or any form of suggestion that this information forms the prior art already known to a person skilled in the art.

WO 2008/127157 A1 discloses a frequency tuned damper having a vibration body and at least one elastic element, which connects the vibration body to a surface, the vibrations of which is to be dampened, wherein the elastic element has a wide portion and a narrow portion disposed at different locations on an axis, which is substantially parallel with the normal of the surface, wherein the wider portion has a cavity, and the wide and narrow portions are inter-connected by a transition portion, wherein the part of the narrow portion that is closest to the transition portion fits inside the cavity, as seen in the direction of the axis, such that the narrow portion can be pushed at least partly into the cavity, thereby flexing the transition portion. With regard to the features of the independent claim, WO 2008/127157 A1 discloses a vehicular steering wheel comprising a wheel hub coupled to a center portion of the steering wheel and configured to be connected to a steering shaft, a damper plate mounted on the wheel hub, and an elastic fastener connecting the wheel hub and the damper plate to provide an elastic force to the damper plate, wherein the wheel hub and the damper plate are sandwiched between a first portion and a third portion of the elastic fastener and elastically supported by the first and third portions of the elastic fastener, wherein a first gap is formed between the wheel hub and the damper plate by the elastic fastener, and wherein, while the damper plate moves in a width direction of the first gap, the elastic fastener allows movement of the damper plate while being elastically deformed.

Further US 8 616 577 B1 discloses a steering wheel unit, including a steering wheel body and an airbag module mounted thereto, wherein the airbag module includes positioning means for maintaining the axial positioning of the airbag module relative to the steering wheel and positioning means for maintaining the radial positioning of the airbag module relative to the steering wheel, wherein the steering wheel unit also includes damping elements that are disposed between the insertion elements and receiving elements of the radial positioning means, wherein the radial positioning means can be in the form of a post within a cylindrical receptacle, where the damping element is therebetween,
wherein the radial positioning means can be in the form of a plate received within a u-shaped receiving element, where the damping element is within the u-shaped receiving element.

Furthermore, CN 104 553 726 B is directed to suspension assemblies for an engine.

### BRIEF SUMMARY

Various aspects of the present invention are directed to providing a vehicular steering wheel that utilizes an airbag module as a mass for damping.

In view of the problems described above, the present invention provides a vehicular steering wheel according to claim 1. Further advantageous embodiments are described in the dependent claims.

With the configuration of the present invention, since the damper plate coupled to an airbag module is connected to the wheel hub by an elastic fastener, the airbag module may be utilized as a mass for damping to absorb vibration. Therefore, the vibration transmitted to the steering wheel is more effectively reduced, and actual vehicle Noise, vibration, harshness (NVH) performance is significantly improved.

Furthermore, since the damping structure is implemented by adding only simple structures such as a plate and an elastic body to the airbag module mounted in the steering wheel, excellent damping performance may be exhibited while reducing costs and weight compared to a separately disposed damper.

The apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIG. 1 is a view exemplarily illustrating the state in which a wheel hub is assembled to a steering wheel according to an exemplary embodiment of the present invention;
FIG. 2 is a view exemplarily illustrating the state in which a damper plate is assembled to a wheel hub according to an exemplary embodiment of the present invention;
FIG. 3 is a view exemplarily illustrating the state in which an airbag module is coupled to a damper plate according to an exemplary embodiment of the present invention; and
FIG. 4 is a cross-sectional view taken along line A-A' in FIG. 2.

It may be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particularly intended application and use environment.

In the figures, reference numbers refer to the same or equivalent parts of the present invention throughout the several figures of the drawing.

### DETAILED DESCRIPTION

Reference will now be made in detail to various embodiments of the present invention(s), examples of which are illustrated in the accompanying drawings and described below. While the invention(s) will be described in conjunction with exemplary embodiments, it will be understood that the present description is not intended to limit the invention(s) to those exemplary embodiments. On the other hand, the invention(s) is/are intended to cover not only the exemplary embodiments, but also various alternatives, modifications, equivalents and other embodiments, which may be included within the scope of the invention as defined by the appended claims.

Hereinafter, embodiments of the present invention will be described in detail with reference to the accompanying drawings.

A vehicular steering wheel 1 according to an exemplary embodiment of the present invention includes a wheel hub 10, a damper plate 20, and elastic fasteners 30.

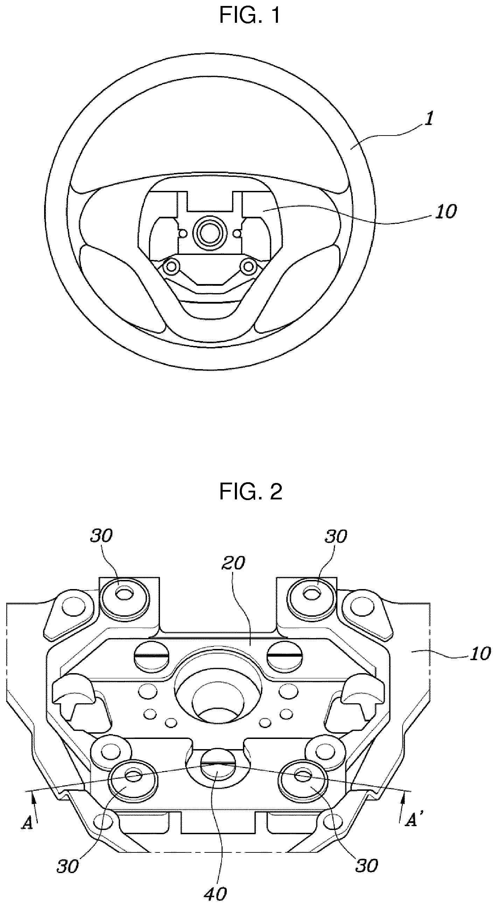

As illustrated in FIG. 1, the wheel hub 10 is coupled to the center portion of the steering wheel 1, and a steering shaft is inserted into a center hole.

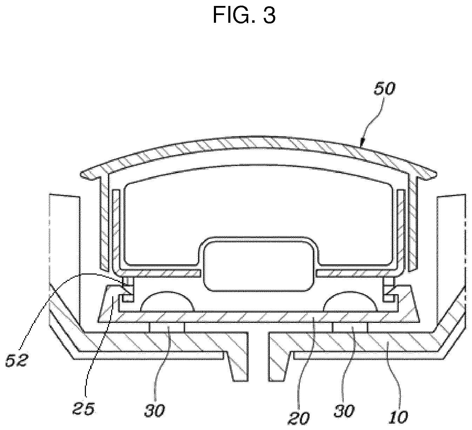

Furthermore, as illustrated in FIG. 2 and FIG. 3, a damper plate 20 is mounted on the wheel hub 10 to overlap a portion of the wheel hub 10, and the airbag module 50 is fastened to the damper plate 20.

For example, hooks 25 are formed on opposite end portions of the damper plate 20, hooking holes 52 corresponding to the hooks 25 are formed in opposite end portions of the lower portion of the airbag module 50, and the airbag module 50 is fastened to the damper plate 20 by the engagement structure between the hooks 25 and the hooking holes 52.

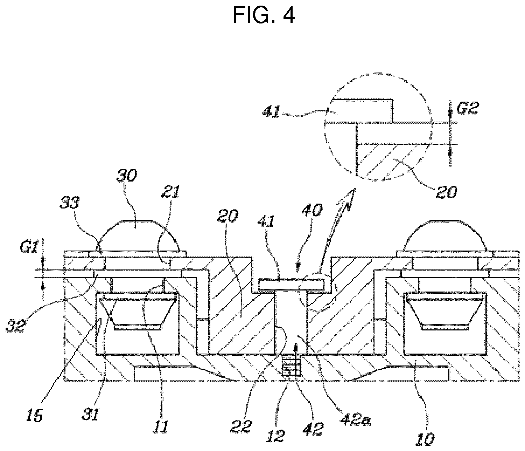

Furthermore, as illustrated in FIG. 4, the wheel hub 10 and the damper plate 20 are connected to each other by elastic fasteners 30, forming a structure that provides elastic force to the damper plate 20 via the elastic fasteners 30.

That is, since the damper plate 20 to which the airbag module 50 is coupled is connected to the wheel hub 10 by the elastic fasteners 30, the airbag module 50 coupled to the damper plate 20 is utilized as a mass for damping to absorb the vibration in the process in which the vibration transmitted to the steering wheel 1 is transmitted to the damper plate 20 through the elastic fasteners 30, so that the vibration transmitted to the steering wheel 1 may be more effectively reduced.

Furthermore, the elastic fasteners 30 are made of an elastic material, and have a structure in which the wheel hub 10 and the damper plate 20 are sandwiched between and tightly supported by the opposite end portions of the elastic fasteners 30.

Furthermore, since the wheel hub 10 and the damper plate 20 are sandwiched between the opposite end portions of the elastic fasteners 30, a first gap G1 is formed between the wheel hub 10 and the damper plate 20, and in the process in which the damper plate 20 moves in the width direction of the first gap G1, the elastic fasteners 30 allow the movement of the damper plate 20 while being elastically deformed. Therefore, the elastic fasteners 30 may be set to have a frequency configured for appropriately damping the vibration transmitted to the steering wheel 1 through the adjustment of rigidity.

That is, when the vibration is transmitted through the steering wheel 1, the airbag module 50 coupled to the damper plate 20 is utilized as a mass and moved. At the instant time, because the elastic fasteners 30 are elastically deformed, the width of the first gap G1 changes, and the vibration transmitted to the steering wheel 1 is canceled.

A configuration in which the above-described elastic fasteners 30 are coupled is described in detail. First fastening holes 11 and second fastening holes 21 are formed in the wheel hub 10 and the damper plate 20, respectively, and the elastic fasteners 30 are provided through the first and second fastening holes 11 and 21.

A plurality of flanges, each of which is formed in the circumferential direction of the external circumferential surface of each elastic fastener 30, are provided at a predetermined interval in the longitudinal direction of each elastic fastener 30. Among the flanges of each elastic fastener 30, a second flange 32 formed in the middle portion of the elastic fastener 30 is tightly supported by each of the external surface of the wheel hub 10 and the internal surface of the damper plate 20, which face each other.

Furthermore, among the flanges of each elastic fastener 30, first and third flanges 31 and 33 at the opposite end portions of the elastic fastener 30 are tightly supported by the internal surface of the wheel hub 10 and the external surface of the damper plate 20, respectively.

That is, the second flange 32 formed at the middle portion of each elastic fastener 30 is positioned between the wheel hub 10 and the damper plate 20, and the external diameter of the second flange 32 is greater than the internal diameters of the first fastening hole 11 and the second elastic hole 21, so that the second coupling flange 32 may be tightly supported between the wheel hub 10 and the damper plate 20.

Furthermore, the first flange 31 formed at the lower end portion of each elastic fastener 30 is positioned on the bottom surface of the wheel hub 10, and the external diameter of the first flange 31 is greater than the internal diameter of the first fastening hole 11, so that the first flange 31 may be tightly supported on the bottom surface of the wheel hub 10.

Furthermore, in an exemplary embodiment of the present invention, the first flange 31 formed at the lower end portion of each elastic fastener 30 is positioned in a groove 15 formed on the bottom surface of the wheel hub 10, and the external diameter of the first flange 31 is greater than the internal diameter of the first fastening hole 11, so that the first flange 31 may be tightly supported on the bottom surface of the wheel hub 10.

Furthermore, the third flange 33 formed at the upper end portion of each elastic fastener 30 is positioned on the top surface of the damper plate 20, in which the external diameter of the third flange 33 is greater than the internal diameter of the second fastening hole 21, so that the third flange 33 may be tightly supported on the top surface of the damper plate 20.

In an exemplary embodiment of the present invention, the internal diameter of the second fastening hole 21 is greater than the internal diameter of the first fastening hole 11.

With the present structure, the elastic fasteners 30 are able to provide an elastic force to the damper plate 20 while connecting the wheel hub 10 and the damper plate 20.

Although the wheel hub 10 and the damper plate 20 are connected to each other by the elastic fasteners 30, a structure may be further provided to prevent the damper plate 20 from escaping due to the inflation pressure of an airbag when the airbag is deployed.

For the present purpose, in an exemplary embodiment of the present invention, the wheel hub 10 and the damper plate 20 may be fastened by a plurality of fastening bolts 40, as illustrated in FIGS. 2 and 4.

Bolt-fastening holes 12 are formed in the wheel hub 10, and bolt insertion holes 22 are formed in the damper plate 20.

Thus, the end portions of the bodies 42 of the fastening bolts 40 are bolted into the bolt-fastening holes 12, respectively, and the remaining portions of the bodies 42 adjacent to the heads 41 of the fastening bolts 40 are inserted into the bolt insertion holes 22, respectively. At the instant time, a predetermined second gap G2 is formed between the top surface of the damper plate 20 connected to the bolt insertion holes 22 and the heads 41 of the fastening bolts 40.

For the present purpose, the length of the insertion bodies 42a inserted into the bolt insertion holes 22 is greater than the depth of the bolt insertion holes 22.

That is, as the vibration is transmitted to the steering wheel 1, the elastic fasteners 30 are elastically deformed and the damper plate 20 is moved up and down. At the instant time, since the bolt insertion holes 22 formed in the damper plate 20 have a length shorter than that of the insertion bodies 42a, the up-and-down movement of the damper plate 20 is not impeded and thus the vibration of the steering wheel 1 is reduced.

However, when the airbag is deployed, the inflation pressure of the airbag is applied to the damper plate 20. At the instant time, since the top surface of the damper plate 20 in which the bolt insertion holes 22 are formed, is engaged with the heads 41 of the fastening bolts 40 and the fastening bolts 40 are bolted into the wheel hub 10, the damper plate 20 is prevented from escaping.

As described above, in an exemplary embodiment of the present invention, since the damper plate 20 to which the airbag module 50 is coupled is connected to the wheel hub 10 by the elastic fasteners 30, the airbag module 50 coupled to the damper plate 20 is utilized as a mass for damping to absorb the vibration in the process in which the vibration transmitted to the steering wheel 1 is transmitted to the damper plate 20 through the elastic fasteners 30. Therefore, the vibration transmitted to the steering wheel 1 is more effectively reduced, and actual vehicle Noise, vibration, harshness (NVH) performance is significantly improved.

Furthermore, since the damping structure is implemented by adding only simple structures such as a plate and an elastic body to the airbag module 50 mounted in the steering wheel 1, excellent damping performance may be exhibited while reducing costs and weight compared to a conventional damper, which is separately disposed.

Furthermore, since the airbag module 50 itself is used as a mass body without changing the structure thereof, it is possible to solve the problem of gas loss or the like which may occur during the deployment of the airbag.

For convenience in explanation and accurate definition in the appended claims, the terms "upper", "lower", "inner", "outer", "up", "down", "upper", "lower", "upwards", "downwards", "front", "rear", "back", "inside", "outside", "inwardly", "outwardly", "internal", "external", "inner", "outer", "forwards", and "backwards" are used to describe features of the exemplary embodiments with reference to the positions of such features as displayed in the figures.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described to explain certain principles of the invention and their practical application, to enable others skilled in the art to make and utilize various exemplary embodiments of the present invention, as well as various alternatives and modifications thereof. It is intended that the scope of the invention be defined by the Claims appended hereto and their equivalents.

## Claims

1. A vehicular steering wheel (1) comprising:
a wheel hub (10) coupled to a center portion of the steering wheel (1) and configured to be connected to a steering shaft;
a damper plate (20) mounted on the wheel hub (10) to fasten an airbag module (50) to the damper plate (20);
an elastic fastener (30) connecting the wheel hub (10) and the damper plate (20) to provide an elastic force to the damper plate (20); and
a fastening bolt (40) configured to fasten the damper plate (20) to the wheel hub (10),
wherein the wheel hub (10) and the damper plate (20) are sandwiched between a first portion and a third portion of the elastic fastener (30) and elastically supported by the first and third portions of the elastic fastener (30),
wherein a first gap (G1) is formed between the wheel hub (10) and the damper plate (20) by the elastic fastener (30), and
wherein, while the damper plate (20) moves in a width direction of the first gap (G1), the elastic fastener (30) allows movement of the damper plate (20) while being elastically deformed,
wherein a bolt-fastening hole (12) is formed in the wheel hub (10) and a bolt insertion hole (22) is formed in the damper plate (20),
wherein the fastening bolt (40) includes a head (41), an insertion body (42a) and an end portion,
wherein the end portion of the fastening bolt (40) is bolted into the bolt-fastening hole (12) and an insertion portion of the insertion body (42a) is inserted into the bolt insertion hole (22), and
wherein a length of the insertion body (42a) is greater than a depth of the bolt insertion hole (22) and a predetermined second gap (G2) is formed between a top surface of the damper plate (20), in which the bolt insertion hole (22) is penetrated, and the head (41) of the fastening bolt (40), such that an up-and-down movement of the damper plate (20) is not impeded and thus a vibration of the steering wheel (1) is reduced.

2. The vehicular steering wheel (1) of claim 1,
wherein the first gap (G1) is formed between the wheel hub (10) and the damper plate (20) by a second portion of the elastic fastener (30) positioned between the first and third portions of the elastic fastener (30).

3. The vehicular steering wheel of claim 2, wherein a flange (32) is formed on the second portion of the elastic fastener (30).

4. The vehicular steering wheel of claim 1, wherein the wheel hub (10) is provided with a first fastening hole (11), the damper plate (20) is provided with a second fastening hole (21), and the elastic fastener (30) is provided through the first and second fastening holes (11, 21),
wherein a plurality of flanges (31, 32, 33), each of which is formed in a circumferential direction of an external circumferential surface of the elastic fastener (30), are provided in a longitudinal direction of the elastic fastener (30), and
wherein first and third flanges (31, 33) among the plurality of flanges are formed at the first and third portions of the elastic fastener (30), respectively and are supported on an internal surface of the wheel hub (10) and an external surface of the damper plate (20), respectively,
wherein a second flange (32) among the plurality of flanges is formed in a middle portion of the elastic fastener (30), is located between an external surface of the wheel hub (10) and an internal surface of the damper plate (20), and is in contact with and supported by each of the external surface of the wheel hub (10) and the internal surface of the damper plate (20), which face each other.

5. The vehicular steering wheel (1) of claim 4,
wherein an internal diameter of the second fastening hole (21) is greater than an internal diameter of the first fastening hole (11).

6. The vehicular steering wheel (1) of claim 4,
wherein the first flange (31) is formed at a lower end portion of the elastic fastener (30) and is positioned in a groove (15) formed on a bottom surface of the wheel hub (10).

## Patentansprüche

1. Fahrzeuglenkrad (1), aufweisend:
eine Radnabe (10), die mit einem zentralen Abschnitt des Lenkrads (1) verbunden ist und konfiguriert ist, um mit einer Lenkwelle verbunden zu sein,
eine an der Radnabe (10) montierte Dämpferplatte (20), um ein Airbagmodul (50) an der Dämpferplatte (20) zu befestigen,
ein elastisches Befestigungselement (30), das die Radnabe (10) und die Dämpferplatte (20) verbindet, um der Dämpferplatte (20) eine elastische Kraft bereitzustellen, und
eine Befestigungsschraube (40), die konfiguriert ist, um die Dämpferplatte (20) an der Radnabe (10) zu befestigen,
wobei die Radnabe (10) und die Dämpferplatte (20) zwischen einem ersten Abschnitt und einem dritten Abschnitt des elastischen Befestigungselements (30) sandwichartig aufgenommen sind und durch den ersten und den dritten Abschnitt des elastischen Befestigungselements (30) elastisch abgestützt sind,
wobei zwischen der Radnabe (10) und der Dämpferplatte (20) ein erster Spalt (G1) durch das elastische Befestigungselement (30) ausgebildet ist, und
wobei, während sich die Dämpferplatte (20) in einer Breitenrichtung des ersten Spalts (G1) bewegt, das elastische Befestigungselement (30) während eines elastischen Verformens eine Bewegung der Dämpferplatte (20) ermöglicht,
wobei ein Schraubenbefestigungsloch (12) in der Radnabe (10) ausgebildet ist und ein Schraubeneinsetzloch (22) in der Dämpferplatte (20) ausgebildet ist,
wobei die Befestigungsschraube (40) einen Kopf (41), einen Einsetzkörper (42a) und einen Endabschnitt aufweist,
wobei der Endabschnitt der Befestigungsschraube (40) in das Schraubenbefestigungsloch (12) geschraubt ist und ein Einsetzabschnitt des Einsetzkörpers (42a) in das Schraubeneinsetzloch (22) eingesetzt ist, und
wobei eine Länge des Einsetzkörpers (42a) größer als eine Tiefe des Schraubeneinsetzlochs (22) ist und ein vorbestimmter zweiter Spalt (G2) zwischen einer oberen Fläche der Dämpferplatte (20), in die das Schraubeneinsetzloch (22) eindringt, und dem Kopf (41) der Befestigungsschraube (40) ausgebildet ist, so dass eine Auf- und Abwärtsbewegung der Dämpferplatte (20) nicht behindert wird und somit eine Vibration des Lenkrades (1) reduziert wird.

2. Fahrzeuglenkrad (1) gemäß Anspruch 1,
wobei der erste Spalt (G1) zwischen der Radnabe (10) und der Dämpferplatte (20) durch einen zweiten Abschnitt des elastischen Befestigungselements (30) ausgebildet ist, positioniert zwischen dem ersten und dem dritten Abschnitt des elastischen Befestigungselements (30).

3. Fahrzeuglenkrad gemäß Anspruch 2, wobei an dem zweiten Abschnitt des elastischen Befestigungselements (30) ein Flansch (32) ausgebildet ist.

4. Fahrzeuglenkrad gemäß Anspruch 1, wobei die Radnabe (10) mit einem ersten Befestigungsloch (11) versehen ist, die Dämpferplatte (20) mit einem zweiten Befestigungsloch (21) versehen ist und das elastische Befestigungselement (30) durch das erste und das zweite Befestigungsloch (11, 21) hindurch vorgesehen ist,
wobei eine Mehrzahl von Flanschen (31, 32, 33), von denen jeder in einer Umfangsrichtung einer Außenumfangsfläche des elastischen Befestigungselements (30) ausgebildet ist, in einer Längsrichtung des elastischen Befestigungselements (30) angeordnet ist, und
wobei ein erster und ein dritter Flansch (31, 33) aus der Mehrzahl von Flanschen jeweils zugeordnet an dem ersten und dem dritten Abschnitt des elastischen Befestigungselements (30) ausgebildet sind und jeweils zugeordnet an einer Innenfläche der Radnabe (10) und einer Außenfläche der Dämpferplatte (20) abgestützt sind,
wobei ein zweiter Flansch (32) aus der Mehrzahl von Flanschen in einem mittleren Abschnitt des elastischen Befestigungselements (30) ausgebildet ist, zwischen einer Außenfläche der Radnabe (10) und einer Innenfläche der Dämpferplatte (20) angeordnet ist und mit jeder von der Außenfläche der Radnabe (10) und der Innenfläche der Dämpferplatte (20), die einander zugewandt sind, in Kontakt ist und durch diese abgestützt ist.

5. Fahrzeuglenkrad (1) gemäß Anspruch 4,
wobei ein Innendurchmesser des zweiten Befestigungslochs (21) größer als ein Innendurchmesser des ersten Befestigungslochs (11) ist.

6. Fahrzeuglenkrad (1) gemäß Anspruch 4,
wobei der erste Flansch (31) an einem unteren Endabschnitt des elastischen Befestigungselements (30) ausgebildet ist und in einer Nut (15) positioniert ist, die an einer unteren Fläche der Radnabe (10) ausgebildet ist.

## Revendications

1. Volant de direction de véhicule (1) comprenant :
- un moyeu de volant (10) couplé à une partie centrale du volant de direction (1) et conçu pour être connecté à un arbre de direction ;
- une plaque d'amortisseur (20) montée sur le moyeu de volant (10) pour fixer un module de coussin de sécurité (50) à la plaque d'amortisseur (20) ;
- une fixation élastique (30) connectant le moyeu de volant (10) et la plaque d'amortisseur (20) pour fournir une force élastique à la plaque d'amortisseur (20) ; et
- un boulon de fixation (40) conçu pour fixer la plaque d'amortisseur (20) au moyeu de volant (10),
dans lequel le moyeu de volant (10) et la plaque d'amortisseur (20) sont pris en sandwich entre une première partie et une troisième partie de la fixation élastique (30) et supportés élastiquement par les première et troisième parties de la fixation élastique (30),
dans lequel un premier espace (G1) est formé entre le moyeu de volant (10) et la plaque d'amortisseur (20) par la fixation élastique (30), et
dans lequel, tandis que la plaque d'amortisseur (20) se déplace dans une direction de la largeur du premier espace (G1), la fixation élastique (30) permet le mouvement de la plaque d'amortisseur (20) tout en étant déformée élastiquement,
dans lequel un trou de fixation de boulon (12) est formé dans le moyeu de volant (10) et un trou d'insertion de boulon (22) est formé dans la plaque d'amortisseur (20),
dans lequel le boulon de fixation (40) comprend une tête (41), un corps d'insertion (42a) et une partie d'extrémité,
dans lequel la partie d'extrémité du boulon de fixation (40) est boulonnée dans le trou de fixation de boulon (12) et une partie d'insertion du corps d'insertion (42a) est insérée dans le trou d'insertion de boulon (22), et
dans lequel une longueur du corps d'insertion (42a) est supérieure à une profondeur du trou d'insertion de boulon (22) et un second espace (G2) prédéterminé est formé entre une surface supérieure de la plaque d'amortisseur (20), dans laquelle le trou d'insertion de boulon (22) est pénétré, et la tête (41) du boulon de fixation (40), de sorte qu'un mouvement vers le haut et vers le bas de la plaque d'amortisseur (20) n'est pas empêché et une vibration du volant de direction (1) est donc réduite.

2. Volant de direction de véhicule (1) selon la revendication 1,
dans lequel le premier espace (G1) est formé entre le moyeu de volant (10) et la plaque d'amortisseur (20) par une deuxième partie de la fixation élastique (30) positionnée entre les première et troisième parties de la fixation élastique (30).

3. Volant de direction de véhicule selon la revendication 2, dans lequel une bride (32) est formée sur la deuxième partie de la fixation élastique (30).

4. Volant de direction de véhicule selon la revendication 1, dans lequel le moyeu de volant (10) est pourvu d'un premier trou de fixation (11), la plaque d'amortisseur (20) est pourvue d'un deuxième trou de fixation (21), et la fixation élastique (30) est agencée à travers les premier et deuxième trous de fixation (11, 21),
dans lequel une pluralité de brides (31, 32, 33), dont chacune est formée dans une direction circonférentielle d'une surface circonférentielle externe de la fixation élastique (30), sont agencés dans une direction longitudinale de la fixation élastique (30), et
dans lequel les première et troisième brides (31, 33) parmi la pluralité de brides sont formées respectivement au niveau des première et troisième parties de la fixation élastique (30) et sont respectivement supportées sur une surface interne du moyeu de volant (10) et une surface externe de la plaque d'amortisseur (20),
dans lequel une deuxième bride (32) parmi la pluralité de brides est formée dans une partie intermédiaire de la fixation élastique (30), est située entre une surface externe du moyeu de volant (10) et une surface interne de la plaque d'amortisseur (20), et est en contact avec et supportée par chacune de la surface externe du moyeu de volant (10) et de la surface interne de la plaque d'amortisseur (20), qui se font face l'une l'autre.

5. Volant de direction de véhicule (1) selon la revendication 4,
dans lequel un diamètre interne du deuxième trou de fixation (21) est supérieur à un diamètre interne du premier trou de fixation (11).

6. Volant de direction de véhicule (1) selon la revendication 4,
dans lequel la première bride (31) est formée au niveau d'une partie d'extrémité inférieure de la fixation élastique (30) et est positionnée dans une rainure (15) formée sur une surface inférieure du moyeu de volant (10).
